# EUROPEAN PATENT APPLICATION

(11) **EP 4 790 476 A1**
(43) Date of publication of application: **12.08.2026**
(21) Application number: 25207486.9
(22) Date of filing: 08.10.2025
(51) Int. Cl.: G02B 27/01

(54) **OPTICAL SYSTEM AND HEAD-MOUNTED DISPLAY DEVICE**

(30) Priority: 10.02.2025 CN 202510147839
(71) Applicant: Beijing Unicorn Technology Co., Ltd., Beijing 100098 (CN)
(72) Inventor: Yizhou, Liao, Beijing, 100098 (CN); Bing, Xiao, Beijing, 100098 (CN)
(74) Representative: Grünecker Patent- und Rechtsanwälte PartG mbB

(57) **Abstract**

Embodiments of the present disclosure disclose an optical system and a head-mounted display device. In specific embodiments, the optical system comprises: an image source; a first prism having a first surface, a second surface, and a third surface, wherein the first surface of the first prism is close to the image source; a second prism, wherein the second surface of the first prism is located at the side of the first prism away from the second prism, the third surface of the first prism is located at the side of the first prism close to the second prism, the second prism has a first surface, and the first surface of the second prism is close to the third surface of the first prism; a lens located at the side of the second prism away from the first prism, wherein a first included angle formed between the first surface of the second prism and the optical axis of the lens and a second included angle formed between the third surface of the first prism and the optical axis of the lens are both acute angles, and the first included angle is equal to the second included angle; a first film layer located at the second surface of the first prism and capable of reflecting and transmitting light; and a second film layer located at the side of the lens away from the second prism and capable of reflecting light.

## Description

### Technical Field

The present disclosure relates to the field of optical imaging technology, in particular to an optical system and a head-mounted display device.

### Background

Currently, applications of head-mounted display devices are becoming increasingly widespread. The head-mounted display devices can be used for content display, for example, the head-mounted display devices can be used to display movie images, game images, web pages, etc. The optical system is an important component for the head-mounted display device.

### Summary

According to an aspect of the embodiments of the present disclosure, an optical system is provided and includes: an image source; a first prism having a first surface, a second surface, and a third surface, wherein the first surface of the first prism is close to the image source; a second prism, wherein the second surface of the first prism is located at the side of the first prism away from the second prism, the third surface of the first prism is located at the side of the first prism close to the second prism, the second prism has a first surface, and the first surface of the second prism is close to the third surface of the first prism; a lens located at the side of the second prism away from the first prism, wherein a first included angle formed between the first surface of the second prism and the optical axis of the lens and a second included angle formed between the third surface of the first prism and the optical axis of the lens are both acute angles, and the first included angle is equal to the second included angle; a first film layer located at the second surface of the first prism and capable of reflecting and transmitting light; and a second film layer located at the side of the lens away from the second prism and capable of reflecting light; wherein the light emitted by the image source enters the first prism from the first surface of the first prism, undergoes at least one total reflection within the first prism, is reflected by the first film layer, exits through the third surface of the first prism, enters the second prism from the first surface of the second prism, is reflected by the second film layer after passing through the second prism and the lens., is reflected by the second film layer sequentially passes through the lens, the first surface of the second prism, the third surface of the first prism, and the second surface of the first prism, and exits through the first film layer.

According to an aspect of the embodiments of the present disclosure, an optical system is provided, wherein an included angle formed between the second surface of the first prism and a plane perpendicular to the optical axis of the lens is a third included angle, and an included angle formed between the first surface of the first prism and the third surface of the first prism is a fourth included angle, and the fourth included angle is greater than twice the third included angle.

According to an aspect of the embodiments of the present disclosure, an optical system is provided, wherein an included angle formed between the third surface of the first prism and the plane perpendicular to the optical axis of the lens is a fifth included angle, and the fourth included angle is equal to a sum of the fifth included angle and twice the third included angle.

According to an aspect of the embodiments of the present disclosure, an optical system is provided, wherein an included angle formed between the third surface of the first prism and the plane perpendicular to the optical axis of the lens is a fifth included angle, and the absolute value of a difference between a sum of the fifth included angle and twice the third included angle and the fourth included angle is less than or equal to 0.8 degree.

According to an aspect of the embodiments of the present disclosure, an optical system is provided, wherein an included angle formed between the third surface of the first prism and the plane perpendicular to the optical axis of the lens is a fifth included angle, and a ratio of twice a sum of the third included angle and the fifth included angle to a complementary angle of the third included angle is greater than 0.9.

According to an aspect of the embodiments of the present disclosure, an optical system is provided, wherein an included angle formed between the third surface of the first prism and the plane perpendicular to the optical axis of the lens is a fifth included angle, and a difference between twice a sum of the third included angle and the fifth included angle and a complementary angle of the third included angle is greater than negative 6 degrees.

According to an aspect of the embodiments of the present disclosure, an optical system is provided, wherein an included angle formed between the third surface of the first prism and the plane perpendicular to the optical axis of the lens is a fifth included angle, and the fifth included angle is greater than 5 degrees and less than 15 degrees.

According to an aspect of the embodiments of the present disclosure, an optical system is provided, wherein the fifth included angle is greater than 5 degrees and less than 8 degrees, or the fifth included angle is greater than 8 degrees and less than 15 degrees.

According to an aspect of the embodiments of the present disclosure, an optical system is provided, wherein the fifth included angle is greater than or equal to 7.5 degrees and less than or equal to 8 degrees.

According to an aspect of the embodiments of the present disclosure, an optical system is provided, wherein the fifth included angle is greater than 8.1 degrees and less than 8.7 degrees.

According to an aspect of the embodiments of the present disclosure, an optical system is provided, wherein the fifth included angle is greater than or equal to 8.7 degrees and less than or equal to 9.3 degrees.

According to an aspect of the embodiments of the present disclosure, an optical system is provided, wherein the fifth included angle is greater than or equal to 9.4 degrees and less than or equal to 9.8 degrees.

According to an aspect of the embodiments of the present disclosure, an optical system is provided, wherein the third included angle is greater than 20 degrees and less than 30 degrees.

According to an aspect of the embodiments of the present disclosure, an optical system is provided, the optical system further includes a compensation member proximate the second surface of the first prism, and after the light reflected by the second film layer passes through the first prism again, the light exits after passing through the compensation member.

According to an aspect of the embodiments of the present disclosure, an optical system is provided, wherein the compensation member is a third prism, the third prism has a first surface located at a side of the third prism away from the first prism and a second surface located at a side of the third prism proximate the first prism, and after the light reflected by the second film layer passes through the first prism again, the light exits after passing through the second surface of the third prism and the first surface of the third prism.

According to an aspect of the embodiments of the present disclosure, an optical system is provided, wherein refractive indices of the first prism, the second prism, and the third prism are consistent.

According to an aspect of the embodiments of the present disclosure, an optical system is provided, wherein the first surface of the third prism is a curved surface.

According to an aspect of the embodiments of the present disclosure, an optical system is provided, wherein a refractive index of the third prism is greater than or equal to 1.45 and less than or equal to 1.85.

According to an aspect of the embodiments of the present disclosure, an optical system is provided, wherein an Abbe number of the third prism is greater than or equal to 40 and less than or equal to 80.

According to an aspect of the embodiments of the present disclosure, an optical system is provided, wherein the second surface of the first prism has a partial area proximate the image source provided with a notch, and the notch is recessed from this partial area into interior of the first prism.

According to an aspect of the embodiments of the present disclosure, an optical system is provided, wherein the partial area of the second surface of the first prism proximate the image source is coated black.

According to an aspect of the embodiments of the present disclosure, an optical system is provided, wherein the partial area of the second surface of the first prism proximate to the image source has a rough surface.

According to an aspect of the embodiments of the present disclosure, an optical system is provided, wherein a refractive index of the lens is consistent with a refractive index of the second prism.

According to an aspect of the embodiments of the present disclosure, an optical system is provided, wherein the lens and the second prism are an integral member.

According to an aspect of the embodiments of the present disclosure, an optical system is provided, wherein as to light emitted by the image source and propagating along the optical axis of the lens, an optical path length from the light enters the first prism through the first surface of the first prism to the light first reaches the second film layer is represented as d, and a focal length of the lens is represented as f, then f/d is greater than or equal to 0.4 and less than or equal to 0.6.

According to an aspect of the embodiments of the present disclosure, an optical system is provided, wherein a refractive index of the first prism is greater than or equal to 1.45 and less than or equal to 1.85.

According to an aspect of the embodiments of the present disclosure, an optical system is provided, wherein an Abbe number of the first prism is greater than or equal to 40 and less than or equal to 80.

According to an aspect of the embodiments of the present disclosure, an optical system is provided, wherein the first surface of the first prism is a curved surface.

According to an aspect of the embodiments of the present disclosure, an optical system is provided, wherein a refractive index of the second prism is greater than or equal to 1.45 and less than or equal to 1.85.

According to an aspect of the embodiments of the present disclosure, an optical system is provided, wherein an Abbe number of the second prism is greater than or equal to 40 and less than or equal to 80.

According to an aspect of the embodiments of the present disclosure, an optical system is provided, wherein the lens and the second prism are separately arranged, and the refractive index of the lens is greater than or equal to 1.4 and less than or equal to 1.95.

According to an aspect of the embodiments of the present disclosure, an optical system is provided, wherein an Abbe number of the lens is greater than or equal to 40 and less than or equal to 100.

According to an aspect of the embodiments of the present disclosure, an optical system is provided, the optical system further includes a first additional lens located between the image source and the first surface of the first prism; wherein, the light emitted by the image source enters the first prism after passing through the first additional lens.

According to an aspect of the embodiments of the present disclosure, an optical system is provided, wherein a refractive index of the first additional lens is greater than or equal to 1.45 and less than or equal to 2.0.

According to an aspect of the embodiments of the present disclosure, an optical system is provided, wherein an Abbe number of the first additional lens is greater than or equal to 15 and less than or equal to 100.

According to an aspect of the embodiments of the present disclosure, an optical system is provided, wherein the second film layer is a semi-transparent and semi-reflective film, and the optical system further includes a second additional lens located at a side of the second film layer away from the lens.

The above different aspects can be combined arbitrarily, and the present invention does not impose any limits.

According to another aspect of the embodiments of the present disclosure, a head-mounted display device is provided and includes: a frame structure; the above optical system mounted to the frame structure.

The technical solution of the present disclosure is further described in detail below in conjunction with the accompanying drawings and embodiments.

### Brief Description of the Drawings

The above and other objects, features and advantages of the present disclosure will become more apparent from a more detailed description of embodiments of the present disclosure in conjunction with the accompanying drawings. The accompanying drawings are used to provide further understanding of embodiments of the present disclosure, and form part of the specification, and are used, together with embodiments of the present disclosure, for explaining the present disclosure, but do not limit the present disclosure. In the accompanying drawings, the same reference numerals generally represent the same components or steps.
Fig. 1 is a structural schematic diagram of an optical system provided in some exemplary embodiments of the present disclosure;
Fig. 2 is a structural schematic diagram of an optical system provided in some other exemplary embodiments of the present disclosure;
Fig. 3-1 is a structural schematic diagram of an optical system provided in still some exemplary embodiments of the present disclosure;
Fig. 3-2 is a structural schematic diagram of an optical system provided in still some exemplary embodiments of the present disclosure;
Fig. 4 is a structural schematic diagram of an optical system provided in still some exemplary embodiments of the present disclosure;
Fig. 5 is a structural schematic diagram of an optical system provided in still some exemplary embodiments of the present disclosure;
Fig. 6 is a structural schematic diagram of an optical system provided in still some exemplary embodiments of the present disclosure;
Fig. 7 is a structural schematic diagram of an optical system provided in still some exemplary embodiments of the present disclosure;
Fig. 8 is a structural schematic diagram of an optical system provided in still some exemplary embodiments of the present disclosure;
Fig. 9-1 is a structural schematic diagram of an optical system provided in still some exemplary embodiments of the present disclosure;
Fig. 9-2 is a structural schematic diagram of an optical system provided in still some exemplary embodiments of the present disclosure;
Fig. 10-1 is a schematic diagram showing the effects of an optical system provided in some exemplary embodiments of the present disclosure;
Fig. 10-2 is a schematic diagram showing the effects of an optical system provided in some other exemplary embodiments of the present disclosure;
Fig. 10-3 is a schematic diagram showing the effects of an optical system provided in still some exemplary embodiments of the present disclosure;
Fig. 11-1 is a structural schematic diagram of an optical system provided in still some exemplary embodiments of the present disclosure;
Fig. 11-2 is a structural schematic diagram of an optical system provided in still some exemplary embodiments of the present disclosure;
Fig. 11-3 is a structural schematic diagram of an optical system provided in still some exemplary embodiments of the present disclosure;
Fig. 11-4 is a structural schematic diagram of an optical system provided in still some exemplary embodiments of the present disclosure;
Fig. 12 is a schematic diagram of a frame structure in some exemplary embodiments of the present disclosure.

Reference numerals in the figures: 10, image source; 20, first prism; 30, second prism; 40, lens; 45, first film layer; 50, second film layer; 201, first surface of the first prism; 203, second surface of the first prism; 205, third surface of the first prism; 207, notch; 100, human eye; 301, first surface of the second prism; V, light entering the first prism from the first surface of the first prism; 60, third prism; 601, first surface of the third prism; 603, second surface of the third prism; 70, first additional lens; 80, second additional lens; Z, axis; ∠R1, included angle formed between the first surface of the second prism and the optical axis of the lens; ∠R2, included angle formed between the third surface of the first prism and the optical axis of the lens; U1, central thickness of an optical system; U2, central thickness of another optical system; P, position to which the first common side needs to move; ∠A, included angle formed between the second surface of the first prism and the target plane; ∠C, included angle formed between the first surface of the first prism and the third surface of the first prism; ∠B, included angle formed between the third surface of the first prism and the target plane; ∠Q, included angle formed between the first surface of the second prism and the target plane; ∠E, included angle formed between the light entering the third surface of the first prism from the first surface of the first prism and the third surface of the first prism; ∠R3, included angle formed between the normal of the image source and the optical axis of the lens; ∠R4, included angle formed between the second surface of the first prism and the optical axis of the lens; 90, frame structure.

### Detailed Description

Exemplary embodiments according to the present disclosure will be described in detail below with reference to the accompanying drawings. Obviously, the described embodiments are merely part but not all of the embodiments of the present disclosure. It should be understood that the present disclosure is not limited by the exemplary embodiments described herein.

In the description of the present disclosure, the orientation or positional relationships indicated by the terms "upper", "lower", "left", "right" and the like are based on the orientation or positional relationships shown in the accompanying drawings. They are only for the convenience of describing the present disclosure and simplifying the description, rather than indicating or implying that the device referred to must have a specific orientation, or must be constructed and operated in a specific orientation. Therefore, they should not be construed as limitations to the present disclosure.

In the description of the present disclosure, unless otherwise clearly specified and limited, the terms "mounting", "connection", "fixation" and the like shall be understood in a broad sense. For example, the connection can be a fixed connection, a detachable connection, or an integral connection; and the connection can be a direct connection or an indirect connection through an intermediate medium. For those skilled in the art, specific meanings of the above terms in the present disclosure can be understood according to specific circumstances.

### Exemplary Overview

The head-mounted display device can also be referred to as a head-mounted display (HMD) or a headset. The head-mounted display device can be used to achieve augmented reality (AR) effects, virtual reality (VR) effects, mixed reality (MR) effects, etc., and can be presented in such forms as glasses or helmets.

As an important component of the head-mounted display device, the optical system can also be referred to as an optical engine. The optical system can be configured to emit light and process the light, such that the light enters an eye box of the optical system. When a user wears the head-mounted display device, the eyes of the user can be in the eye box, and the light can be projected onto the eyes of the user, thereby allowing the user to see the display image. Therefore, in order to ensure the usage experience of the user, it is necessary to design the optical system reasonably.

### Exemplary Structure

Some exemplary embodiments of the present disclosure provide an optical system. The optical system provided in the embodiments of the present disclosure may include an image source, a prism, and a lens.

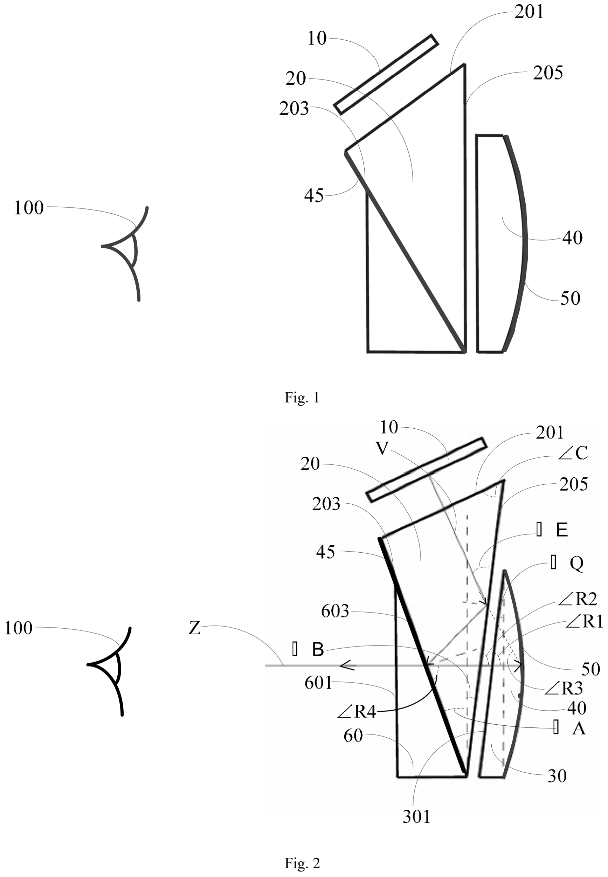

For example, as shown in Fig. 1, the optical system provided in the embodiments of the present disclosure may include an image source 10, a first prism 20, and a lens 40.

In some optional embodiments of the present disclosure, the image source 10 can be configured to emit light for displaying images. The image source 10 may include, but is not limited to, an organic light emitting diode (OLED) image source, a liquid crystal image source, a liquid crystal on silicon (LCOS) image source, a micro electro mechanical system (MEMS) image source, a digital micromirror device (DMD), etc. For example, the image source 10 can be an OLED display screen.

In some optional embodiments of the present disclosure, the first prism 20 can be configured to extend the optical path of the optical system. The first prism 20 can have a first surface 201, a second surface 203, and a third surface 205. For example, the first surface 201 and the second surface 203 of the first prism 20 can intersect, the first surface 201 and the third surface 205 can intersect, and the second surface 203 and the third surface 205 can intersect. The first surface 201, the second surface 203, and the third surface 205 of the first prism 20 can all be flat surfaces, and the first prism 20 can be a triangular prism. In an optional example, the first surface 201 of the first prism 20 can be perpendicular to the second surface 203 of the first prism 20, and the first prism 20 can be a right-angled prism.

It can be understood that the "intersection" or "included angle" described in the present disclosure may refer to the actual intersection of two elements or the actual included angle formed between two elements. If two elements do not actually intersect or no included angle is formed between the two elements, after the two elements are extended along their respective extension directions, the non-actually existing parts after the extension may also intersect or form an included angle, thereby meeting the relevant limitations in the embodiments of the present disclosure.

In some embodiments, the first surface 201 of the first prism 20 may also be a curved surface to optimize the field curvature and pupil shift distortion.

In some optional embodiments of the present disclosure, the lens 40 can be used to bear optical power and correct aberrations. The first surface 201 of the first prism 20 can be close to the image source 10, the second surface 203 of the first prism 20 can be located at the side of the first prism 20 away from the lens 40, and the third surface 205 of the first prism 20 can be located at the side of the first prism 20 close to the lens 40. For example, the first surface 201 of the first prism 20 can face the image source 10. Both the first surface 201 and the second surface 203 of the first prism 20 can be located at the side of the first prism 20 close to the eye box of the optical system.

It can be understood that the eye box of the optical system can be an area where the human eye (such as the human eye 100 in Fig. 1) can move. Within this area, the human eye 100 can see the display image. The eye box of the optical system can also be referred to as the eye box or EB. The size of the eye box of the optical system is an important design indicator in the optical system.

In some optional embodiments of the present disclosure, as shown in Fig. 1, the optical system provided in the embodiments of the present disclosure may further include film layers, for example, a first film layer 45 and a second film layer 50. The first film layer 45 can be located at the second surface 203 of the first prism 20 and is capable of reflecting and transmitting light. The first film layer 45 can be a semi-transparent and semi-reflective film without a light-splitting ability or a polarizing beam-splitting film. The first film layer 45 can be arranged on the second surface 203 of the first prism 20 by means of bonding, coating, etc. The second film layer 50 can be located at the side of the lens 40 away from the first prism 20 and is capable of reflecting light. The second film layer 50 can be used for total reflection or partial reflection of light. In this way, the second film layer 50 can be a total reflection film or a semi-transparent and semi-reflective film. The second film layer 50 can be arranged on the side of the lens 40 away from the first prism 20 by means of bonding, coating, etc.

It should be noted that the light emitted by the image source 10 can enter the first prism 20 from the first surface 201 of the first prism 20, undergoes at least one total reflection within the first prism 20, and is then reflected by the first film layer 45. The light exits through the third surface 205 of the first prism 20, and is reflected by the second film layer 50 after passing through the lens 40. The light reflected by the second film layer 50 sequentially passes through the lens 40, the third surface 205 of the first prism 20 and the second surface 203 of the first prism 20, and exits through the first film layer 45. The light exiting from the first film layer 45 can enter the eye box of the optical system.

In the optical system provided in the embodiments of the present disclosure, through cooperation of the image source 10, the first prism 20, the lens 40, the first film layer 45, and the second film layer 50, the light emitted by the image source 10 can enter the eye box of the optical system. In this way, the human eye 100 can see the display image provided by the image source 10. Therefore, the head-mounted display device can normally display contents to meet the usage needs of the user, such as meeting the movie-watching needs of the user.

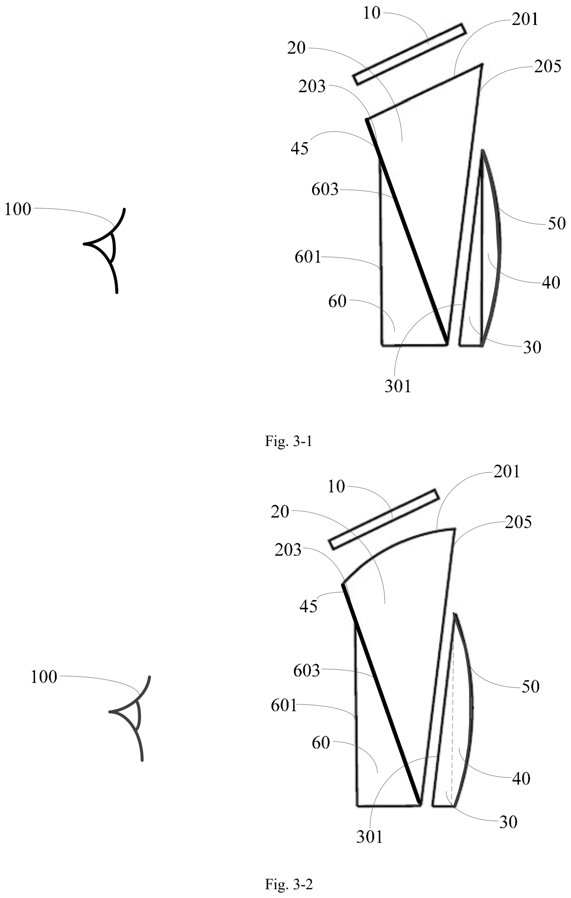

In some optional embodiments of the present disclosure, as shown in Figs. 2, 3-1, and 3-2, the optical system provided in the embodiments of the present disclosure may further include a second prism 30 in addition to an image source 10, a first prism 20, a lens 40, a first film layer 45, and a second film layer 50. The second surface 203 of the first prism 20 can be located at the side of the first prism 20 away from the second prism 30. The third surface 205 of the first prism 20 can be located at the side of the first prism 20 close to the second prism 30. The second prism 30 may have a first surface 301. The first surface 301 of the second prism 30 can be close to the third surface 205 of the first prism 20. The first surface 301 of the second prism 30 can be a flat surface. The first surface 301 of the second prism 30 and the third surface 205 of the first prism 20 can face each other with a gap therebetween.

In some optional embodiments of the present disclosure, the lens 40 can be located at the side of the second prism 30 away from the first prism 20. The lens 40 and the second prism 30 can be an integral member, for example, please refer to Figs. 2 and 3-2. Alternatively, the lens 40 and the second prism 30 can be separately arranged, for example, please refer to Fig. 3-1. If the lens 40 and the second prism 30 are an integral member, it can be understood that one surface of the second prism 30 is a curved surface, and the part constituting the lens 40 and the part constituting the second prism 30 can be integrally injection-molded. If the lens 40 and the second prism 30 are separately arranged, the lens 40 and the second prism 30 can be injection-molded separately and fixedly connected by means of bonding, etc. In addition, the surface of the lens 40 away from the second prism 30 can be spherical or aspherical. For example, the surface of the lens 40 away from the second prism 30 can be a rotationally symmetric aspherical surface.

It should be noted that the light emitted by the image source 10 can enter the first prism 20 from the first surface 201 of the first prism 20, undergoes at least one total reflection within the first prism 20, and is then reflected by the first film layer 45. The light exits through the third surface 205 of the first prism 20 and enters the second prism 30 from the first surface 301 of the second prism 30, and is reflected by the second film layer 50 after passing through the second prism 30 and the lens 40. The light reflected by the second film layer 50 sequentially passes through the lens 40, the first surface 301 of the second prism 30, the third surface 205 of the first prism 20 and the second surface 203 of the first prism 20, and exits through the first film layer 45.

In some optional embodiments of the present disclosure, the light (such as the light V in Fig. 2) entering the first prism 20 from the first surface 201 of the first prism 20 may first undergo a total reflection on the third surface 205 of the first prism 20, then undergoes a reflection (which can be reflected by the first film layer 45) on the second surface 203 of the first prism 20, and then exits through the third surface 205 of the first prism 20 and enters the second prism 30 from the first surface 301 of the second prism 30. Of course, before the light entering the first prism 20 from the first surface 201 of the first prism 20 exits through the third surface 205 of the first prism 20, the number of total reflections experienced within the first prism 20 may not be limited to one, and the number of reflections within the first prism 20 may also not be limited to one. For example, after a total reflection occurs at the third surface 205 of the first prism 20 and a reflection occurs at the second surface 203 of the first prism 20, another total reflection may occur at the third surface 205 of the first prism 20, and another reflection may occur at the second surface 203 of the first prism 20, and then the light exits through the third surface 205 of the first prism 20.

The light exiting from the third surface 205 of the first prism 20 can enter the second prism 30 from the first surface 301 of the second prism 30. The light entering the second prism 30 can propagate to the second film layer 50 after sequentially passing through the second prism 30 and the lens 40. The second film layer 50 can reflect the light to adjust the propagation direction of the light. For example, referring to Fig. 2, the second film layer 50 can adjust the propagation direction of the light from horizontally rightward to horizontally leftward. In this way, the light with the adjusted propagation direction can sequentially pass through the lens 40, the first surface 301 of the second prism 30, the third surface 205 of the first prism 20, the second surface 203 of the first prism 20, and the first film layer 45 until reaching the eye box of the optical system.

In the optical system provided in the embodiments of the present disclosure, through cooperation of the image source 10, the first prism 20, the second prism 30, the lens 40, the first film layer 45, and the second film layer 50, the light emitted by the image source 10 can enter the eye box of the optical system. In this way, the human eye 100 can see the display image provided by the image source 10. Therefore, the head-mounted display device can normally display contents to meet the usage needs of the user, such as meeting the movie-watching needs of the user.

In some optional embodiments of the present disclosure, the optical system may further include a compensation member. The compensation member can compensate for the deflection of light in the first prism 20. In addition, the compensation member can also perform an optical path compensation function to make up for the optical path difference of the light emitted from different light-emitting positions on the image source 10 after propagating in the first prism 20, such that the optical paths of lights emitted from different light-emitting positions are basically the same. The compensation member can be close to the second surface 203 of the first prism 20. After being reflected by the second film layer 50, the light passes through the first prism 20 again and then exits through the compensation member. For example, the light emitted by the image source 10 can propagate along the following target path: the first prism 20 →the first film layer 45 →the first prism 20 → the second prism 30 → the lens 40 → the second film layer 50 → the lens 40 → the second prism 30 →the first prism 20 → the first film layer 45 → the compensation member → the eye box of the optical system.

In this way, when the compensation member is introduced, the light emitted by the image source 10 can enter the eye box of the optical system. In this way, the human eye 100 can see the display image provided by the image source 10. In addition, when the compensation member is introduced, it is also conducive to ensuring that the optical paths of the lights emitted from different light-emitting positions are basically the same, and it is conducive to compensating for the deflection of the light in the first prism 20, and improving the imaging quality of the optical system.

In some optional embodiments of the present disclosure, as shown in Figs. 2 to 5, the compensation member can be a third prism 60. The third prism 60 may have a first surface 601 and a second surface 603. The first surface 601 of the third prism 60 can be located at the side of the third prism 60 away from the first prism 20. The second surface 603 of the third prism 60 can be located at the side of the third prism 60 close to the first prism 20. After the light reflected by the second film layer 50 passes through the first prism 20 again, the light exits after passing through the second surface 603 of the third prism 60 and the first surface 601 of the third prism 60.

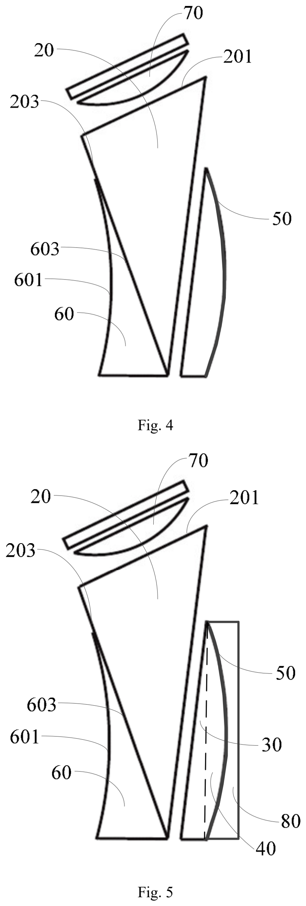

Optionally, both the first surface 601 and the second surface 603 of the third prism 60 can be flat surfaces, for example, refer to Figs. 2, 3-1, and 3-2. Alternatively, the first surface 601 of the third prism 60 can be a curved surface, and the second surface 603 of the third prism 60 can be a flat surface, for example, please refer to Figs. 4 and 5. The first surface 601 and the second surface 603 of the third prism 60 may intersect. The first film layer 45 can be a polarizing beam-splitting film located between the second surface 603 of the third prism 60 and the second surface 203 of the first prism 20. A quarter-wave plate can be arranged between the third surface 205 of the first prism 20 and the first surface 301 of the second prism 30. The polarizing beam-splitting film and the quarter-wave plate can be used in combination to enable the light emitted by the image source 10 to propagate along the target path described above.

After the light reflected by the second film layer 50 passes through the first prism 20 again, the light can exit through the second surface 203 of the first prism 20 and enter the third prism 60 from the second surface 603 of the third prism 60, and then exits through the first surface 601 of the third prism 60 until reaching the eye box of the optical system.

In this way, when the compensation member is the third prism 60, the light emitted by the image source 10 can enter the eye box of the optical system. In this way, the human eye 100 can see the display image provided by the image source 10. In addition, the third prism 60 is conducive to ensuring that the optical paths of the lights emitted from different light-emitting positions are basically the same, and is conducive to compensating for the deflection of the light in the first prism 20, and improving the imaging quality of the optical system. Moreover, the surface shape of the third prism 60 is simple and easy to process.

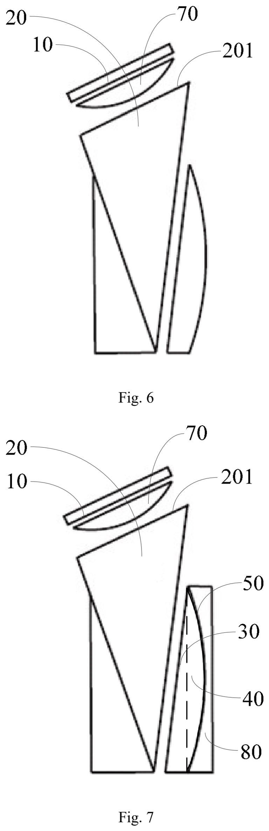

In some optional embodiments of the present disclosure, as shown in Figs. 4 to 8, the optical system may further include a first additional lens 70. The first additional lens 70 can be located between the image source 10 and the first surface 201 of the first prism 20. The light emitted by the image source 10 may enter the first prism 20 after passing through the first additional lens 70.

Optionally, the first additional lens 70 can belong to a positive lens. For example, the first additional lens 70 can be a plano-convex lens. For another example, the first additional lens 70 can be a biconvex lens.

Due to the arrangement of the first additional lens 70, the light emitted by the image source 10 can first pass through the first additional lens 70 and then enter the first prism 20 from the first surface 201 of the first prism 20. The first additional lens 70 can be an aspherical lens, thereby being conducive to correcting aberrations and ensuring the imaging quality of the optical system.

In some embodiments of the present disclosure, at least one of the image source 10 and the first additional lens 70 can move relative to the first prism 20 to perform diopter adjustment.

In some optional embodiments of the present disclosure, the second film layer 50 can be a semi-transparent and semi-reflective film. As shown in Figs. 5, 7, and 8, the optical system may further include a second additional lens 80. The second additional lens 80 can be located at the side of the second film layer 50 away from the lens 40.

Optionally, the second additional lens 80 can be attached to the second film layer 50. Alternatively, a gap can be formed between the second additional lens 80 and the second film layer 50.

Herein, the second additional lens 80 can be used as a compensating lens for the lens 40. Since the second additional lens 80 is located at the side of the second film layer 50 away from the lens 40, the light in the external environment (also referred to as the ambient light) can sequentially pass through the second additional lens 80, the second film layer 50, the lens 40, the second prism 30, the first prism 20, and the third prism 60 until reaching the eye box of the optical system. In this way, the ambient light can enter the human eye 100 without deflection. When the user wears the head-mounted display device to observe the external environment, the user can see an undistorted environmental image.

In some embodiments, the first surface 601 of the third prism 60 can be a curved surface, such as a concave surface. This concave surface can effectively compensate for the optical power of the lens 40. In this case, there may be no need to additionally provide a second additional lens 80 as a compensating lens for the lens 40.

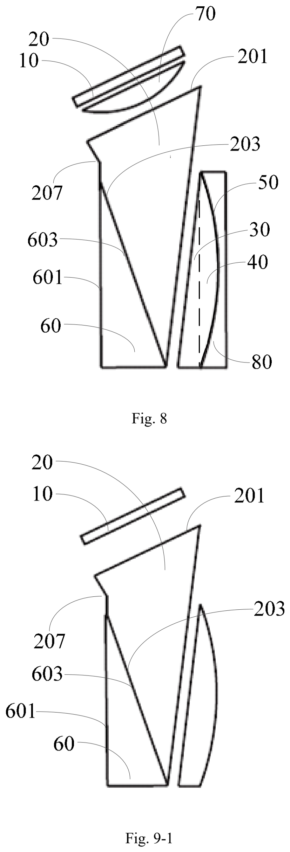

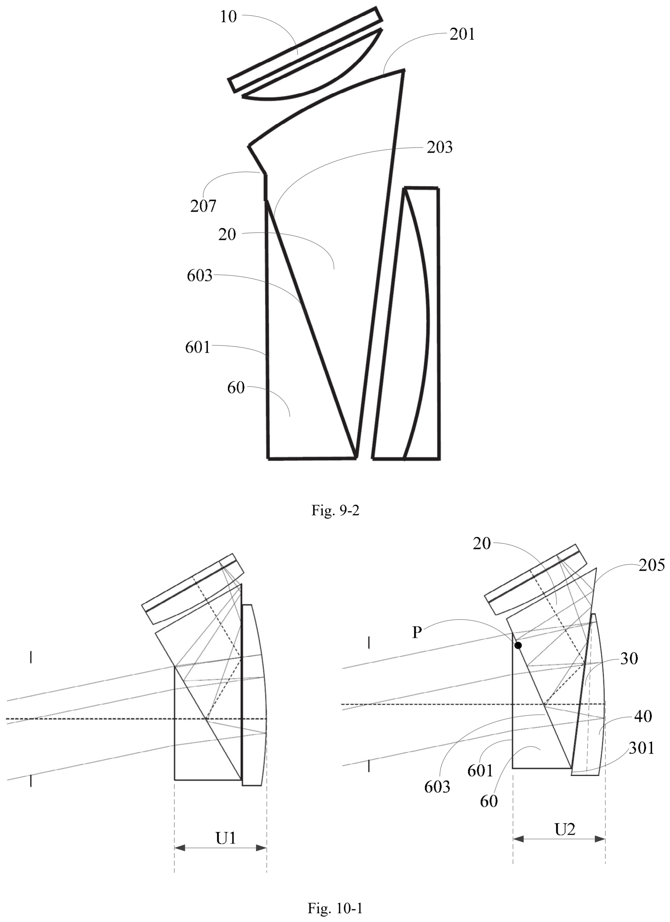

In some optional embodiments of the present disclosure, as shown in Figs. 8, 9-1, and 9-2, a notch 207 may be provided at a partial area of the second surface 203 of the first prism 20 close to the image source 10. The notch 207 can be recessed from this partial area (this partial area can be referred to as the target area hereinafter) into the interior of the first prism 20.

Optionally, the common side between the first surface 601 of the third prism 60 and the second surface 603 of the third prism 60 can be referred to as a first common side. The target area can be located at the second surface 203 of the first prism 20, in the area between the first surface 201 of the first prism 20 and the first common side. The notch 207 can be a V-shaped notch.

It should be noted that after the light emitted from an edge area of the image source 10 (for example, a lower-left edge area of the image source 10 in Figs. 2 to 9-2) enters the first prism 20 from the first surface 201 of the first prism 20, the light can be directly projected onto the target area of the second surface 203 of the first prism 20 (that is, the light is not first projected onto the third surface 205 of the first prism 20 according to the designed optical path). If the light directly projected onto the target area of the second surface 203 of the first prism 20 subsequently reaches the eye box of the optical system together with the normal optical path, it may cause ghost images, and the imaging quality of the optical system cannot be guaranteed. Through researches, it is found that by providing a notch 207 in a partial area of the second surface 203 of the first prism 20 proximate the image source 10, the propagation path of the light directly projected onto the target area of the second surface 203 of the first prism 20 can be changed, such that the light cannot reach the eye box of the optical system. For example, the light does not meet the total reflection conditions (for example, the condition that the incident angle is greater than or equal to a critical angle is not satisfied), thereby being conducive to eliminating ghost images and ensuring the imaging quality of the optical system.

In some optional embodiments of the present disclosure, a partial area of the second surface 203 of the first prism 20 close to the image source 10 can be coated black. For example, the wall defining the notch 207 can be coated black.

Optionally, the wall defining the notch 207 can be coated black through a coating process. In this way, the light directly projected onto the target area of the second surface 203 of the first prism 20 will be absorbed and total reflection will not occur, thereby being conducive to eliminating ghost images and ensuring the imaging quality of the optical system.

In some optional embodiments of the present disclosure, a partial area of the second surface 203 of the first prism 20 close to the image source 10 can have a rough surface. For example, the wall defining the notch 207 can have a rough surface.

Optionally, the wall defining the notch 207 may have a relatively large surface roughness. In this way, the light directly projected onto the target area of the second surface 203 of the first prism 20 will undergo diffuse reflection instead of total reflection, thereby being conducive to eliminating ghost images and ensuring the imaging quality of the optical system.

In some optional embodiments of the present disclosure, the first included angle formed between the first surface 301 of the second prism 30 and the optical axis of the lens 40 and the second included angle formed between the third surface 205 of the first prism 20 and the optical axis of the lens 40 may both be acute angles, and the first included angle may be equal to the second included angle. In this text, the first included angle being equal to the second included angle can be understood as that the two included angles can be equal or basically the same.

Optionally, the optical axis of the lens 40 can be represented as the axis Z in Fig. 2. The first surface 301 of the second prism 30 can be arranged obliquely relative to the optical axis of the lens 40, such that the first included angle formed between the first surface 301 of the second prism 30 and the optical axis of the lens 40 is an acute angle. The third surface 205 of the first prism 20 can be arranged obliquely relative to the optical axis of the lens 40, such that the second included angle formed between the third surface 205 of the first prism 20 and the optical axis of the lens 40 is an acute angle. The inclination of the third surface 205 of the first prism 20 relative to the optical axis of the lens 40 can be consistent with the inclination of the first surface 301 of the second prism 30 relative to the optical axis of the lens 40. The inclination of the third surface 205 of the first prism 20 relative to the optical axis of the lens 40 can be characterized by the first included angle formed between the first surface 301 of the second prism 30 and the optical axis of the lens 40. For the first included angle, please refer to ∠R1 in Fig. 2. The inclination of the first surface 301 of the second prism 30 relative to the optical axis of the lens 40 can be characterized by the second included angle formed between the third surface 205 of the first prism 20 and the optical axis of the lens 40. For the second included angle, please refer to ∠R2 in Fig. 2. Herein, both ∠R1 and ∠R2 can be between 0 degree and 90 degrees, and ∠R1 and ∠R2 may be equal.

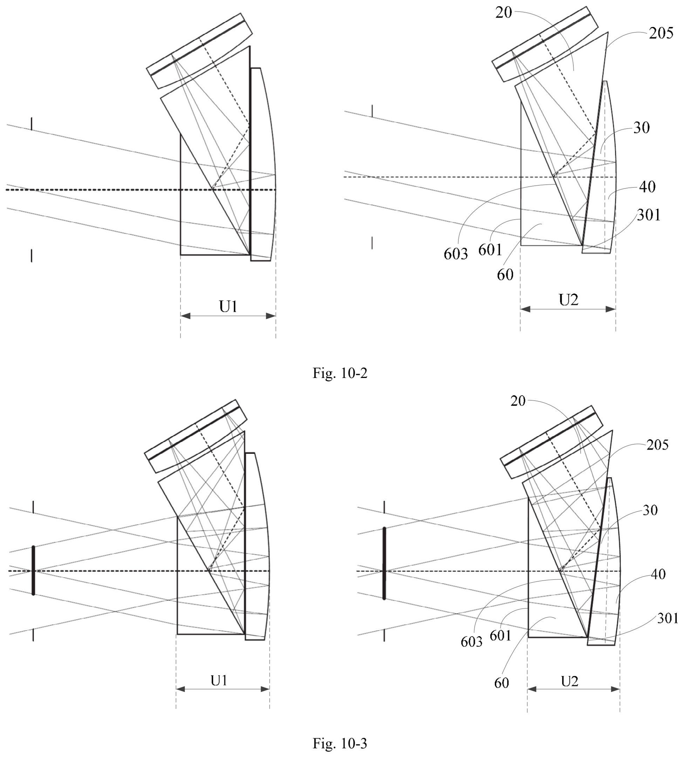

Two optical systems are shown in each of Figs. 10-1, 10-2, and 10-3. In any one of Figs. 10-1, 10-2, and 10-3, in the optical system on the right, the third surface 205 of the first prism 20 and the first surface 301 of the second prism 30 are both inclined relative to the optical axis of the lens 40, and the inclination of the third surface 205 of the first prism 20 relative to the optical axis of the lens 40 is consistent with the inclination of the first surface 301 of the second prism 30 relative to the optical axis of the lens 40. In the optical system on the left, the third surface 205 of the first prism 20 and the first surface 301 of the second prism 30 are both not inclined relative to the optical axis of the lens 40 (that is, ∠R1 and ∠R2 are basically right angles). In addition, the thickness (central thickness) of the optical system on the left along the optical axis of the lens 40 can be represented as U1, and the thickness (central thickness) of the optical system on the right along the optical axis of the lens 40 can be represented as U2, and U1 is the same as U2. It should be noted that Fig. 10-1 shows the path of the light emitted from a certain point in the right half area of the image source 10 in Figs. 2 to 9-2, Fig. 10-2 shows the path of the light emitted from a certain point in the left half area of the image source 10 in Figs. 2 to 9-2, and Fig. 10-3 shows the paths of lights emitted from a certain point in the left half area and a certain point in the right half area of the image source 10 in Figs. 2 to 9-2 at the same time. The dotted line in the figures represents the optical axis of the optical system.

The eye box of the optical system needs to cover the light from each area of the image source 10 to ensure the user experience. In Fig. 10-3, the thickened vertical line indicates the size of the eye box of the optical system in this cross section. By comparing the two optical systems, it can be known that when the central thickness is the same and the same field of view is achieved, the size of the eye box of the optical system on the left is smaller than the size of the eye box of the optical system on the right. Therefore, in the embodiments of the present disclosure, by making both the third surface 205 of the first prism 20 and the first surface 301 of the second prism 30 inclined relative to the optical axis of the lens 40, and making the inclination of the third surface 205 of the first prism 20 relative to the optical axis of the lens 40 consistent with the inclination of the first surface 301 of the second prism 30 relative to the optical axis of the lens 40, a larger eye box can be achieved under the same central thickness and the same field of view. In addition, it can be known from observation that, if the size of the eye box of the optical system on the right is reduced to the size of the eye box of the optical system on the left, the above first common side (i.e., the common side between the first surface 601 of the third prism 60 and the second surface 603 of the third prism 60) can move to the position P in Fig. 10-1. Obviously, if the first common side moves to the position P, U2, which is the central thickness of the optical system on the right, will also be reduced accordingly. Therefore, in the embodiments of the present disclosure, by making both the third surface 205 of the first prism 20 and the first surface 301 of the second prism 30 inclined relative to the optical axis of the lens 40, and making the inclination of the third surface 205 of the first prism 20 relative to the optical axis of the lens 40 consistent with the inclination of the first surface 301 of the second prism 30 relative to the optical axis of the lens 40, a smaller central thickness can be achieved under the same field of view and the same-sized eye box, thereby being conducive to the miniaturization and lightweight of the optical system.

In some optional embodiments of the present disclosure, the included angle formed between the second surface 203 of the first prism 20 and a plane perpendicular to the optical axis of the lens 40 is the third included angle, the included angle formed between the first surface 201 of the first prism 20 and the third surface 205 of the first prism 20 is the fourth included angle, and the fourth included angle can be greater than twice the third included angle.

For the convenience of description, the plane perpendicular to the optical axis of the lens 40 can be referred to as a target plane. The included angle, the third included angle, formed between the second surface 203 of the first prism 20 and the target plane can be represented as ∠A shown in Fig. 2. The included angle, the fifth included angle hereinafter, formed between the third surface 205 of the first prism 20 and the target plane can be represented as ∠B shown in Fig. 2. The included angle, the fourth included angle, formed between the first surface 201 of the first prism 20 and the third surface 205 of the first prism 20 can be represented as ∠C shown in Fig. 2.

In some optional embodiments of the present disclosure, ∠C≠2∠A. For example, ∠C>2∠A.

Optionally, the common side between the second surface 203 of the first prism 20 and the third surface 205 of the first prism 20 can be referred to as the second common side. The target plane can be a plane that passes through the second common side and is perpendicular to the axis Z in Fig. 2.

It can be understood that when the prism has a tip, two adjacent surfaces extend until they contact each other, thereby forming an actual common side. When the prism does not have a tip, that is, two adjacent surfaces cannot extend until they contact each other but terminate at different positions, the common side can be a side defined when two adjacent surfaces theoretically extend and come into contact with each other.

When both the third surface 205 of the first prism 20 and the first surface 301 of the second prism 30 described above are not inclined relative to the optical axis of the lens 40, ∠C = 2∠A. By setting ∠C ≠ 2∠A, the optical system provided in the embodiments of the present disclosure can be significantly different from the optical system in this case. For example, in the optical system provided in the embodiments of the present disclosure, both the third surface 205 of the first prism 20 and the first surface 301 of the second prism 30 are inclined relative to the optical axis of the lens 40, and the inclination of the third surface 205 of the first prism 20 relative to the optical axis of the lens 40 can be consistent with the inclination of the first surface 301 of the second prism 30 relative to the optical axis of the lens 40, thereby being conducive to achieving a larger eye box under the same central thickness and the same field of view, achieving a smaller central thickness under the same field of view and the same-sized eye box, and facilitating the miniaturization and lightweight of the optical system.

In some optional embodiments of the present disclosure, the fourth included angle may be equal to the sum of the fifth included angle and twice the third included angle, that is, ∠C = 2∠A + ∠B.

In some optional embodiments of the present disclosure, the absolute value of the difference between the sum of the fifth included angle and twice the third included angle and the fourth included angle is less than or equal to 0.8 degree, that is, |∠C-(2∠A + ∠B)| ≤ 0.8°.

Optionally, |∠C-(2∠A + ∠B)| can be equal to 0, that is, ∠C can be the same as (2∠A + ∠B). Of course, ∠C and (2∠A + LB) may also be different but close enough, that is, ∠C and (2∠A + LB) can be basically the same. For example, |∠C-(2∠A + ∠B)| may be equal to 0.1°, 0.2°, 0.7°, etc., and will not be listed one by one herein.

Through the constraint condition of |∠C-(2∠A + ∠B)| ≤ 0.8°, ∠C can be made the same as or basically the same as (2∠A + LB). Through researches, it is found that when ∠C is the same as or basically the same as (2∠A + LB), it is conducive to ensuring that for the optical system provided in the embodiments of the present disclosure, the light emitted by the image source 10 propagates along the target path described above.

In some optional embodiments of the present disclosure, the ratio of twice the sum of the third included angle and the fifth included angle to the complementary angle of the third included angle is greater than 0.9, that is, 2(∠A + ∠B)/(90°-∠A) > 0.9.

In some optional embodiments of the present disclosure, the difference between twice the sum of the third included angle and the fifth included angle and the complementary angle of the third included angle is greater than negative 6 degrees, that is, 2(∠A + ∠B)-(90°-∠A) > -6°. The formula 2(∠A + ∠B)-(90°-∠A) > -6° can also be transformed into 3∠A + 2∠B-90° > -6°.

It can be known through geometric derivation that 2(∠A + ∠B) can be equal to the included angle formed between the normal of the image source 10 and the optical axis of the lens 40. The included angle formed between the normal of the image source 10 and the optical axis of the lens 40 can be represented as ∠R3 in Fig. 2. In addition, 90°-∠A can be equal to the included angle formed between the second surface 203 of the first prism 20 and the optical axis of the lens 40. The included angle formed between the second surface 203 of the first prism 20 and the optical axis of the lens 40 can be represented as ∠R4 in Fig. 2. Through researches, it is found that restricting ∠A and LB to 2(∠A + ∠B)/(90°-∠A) > 0.9, restricting ∠A and ∠B to 3∠A + 2∠B-90° > -6° are conducive to making the light that may form ghost images as far away from the effective display image as possible, and are conducive to ensuring the imaging quality of the optical system.

In some optional embodiments of the present disclosure, the fifth included angle can be greater than 5 degrees and less than 15 degrees, that is, LB can be greater than 5° and less than 15°. In other words, ∠B can be restricted within a range of (5°, 15°). For example, LB can be 6°, 7°, 8°, 9°, 10°, 11°, 12°, 13°, 14°, etc., which will not be listed one by one herein.

Through researches, it is found that restricting ∠B within a range of (5°, 15°) is conducive to ensuring the rationality of the parameters of the first prism 20, and is conducive to ensuring the imaging quality of the optical system.

In some optional embodiments of the present disclosure, the fifth included angle can be greater than 5 degrees and less than 8 degrees, or the fifth included angle can be greater than 8 degrees and less than 15 degrees, that is, ∠B can be greater than 5° and less than 8°, or ∠B can be greater than 8° and less than 15°. In other words, ∠B can be restricted within a range of (5°, 8°) U (8°, 15°). For example, ∠B can be 6°, 7°, 9°, 10°, 11°, 12°, 13°, 14°, etc., which will not be listed one by one herein.

In some optional embodiments of the present disclosure, the fifth included angle can be greater than or equal to 7.5 degrees and less than or equal to 8 degrees, that is, ∠B can be greater than or equal to 7.5° and less than or equal to 8°. In other words, ∠B can be restricted within a range of [7.5°, 8°]. For example, ∠B can be 7.5°, 7.7°, 7.8°, 7.9°, 8°, etc., which will not be listed one by one herein.

In some optional embodiments of the present disclosure, the fifth included angle can be greater than 8.1 degrees and less than 8.7 degrees, that is, ∠B can be greater than 8.1° and less than 8.7°. In other words, ∠B can be restricted within a range of (8.1°, 8.7°). For example, ∠B can be 8.2°, 8.3°, 8.4°, 8.5°, 8.6°, etc., which will not be listed one by one herein.

In some optional embodiments of the present disclosure, the fifth included angle can be greater than or equal to 8.7 degrees and less than or equal to 9.3 degrees, that is, ∠B can be greater than or equal to 8.7° and less than or equal to 9.3°. In other words, ∠B can be restricted within a range of [8.7°, 9.3°]. For example, LB can be 8.7°, 8.8°, 8.9°, 9.1°, 9.2°, 9.3°, etc., which will not be listed one by one herein.

In some optional embodiments of the present disclosure, the fifth included angle can be greater than or equal to 9.4 degrees and less than or equal to 9.8 degrees, that is, ∠B can be greater than or equal to 9.4° and less than or equal to 9.8°. In other words, ∠B can be restricted within a range of [9.4°, 9.8°]. For example, LB can be 9.4°, 9.5°, 9.6°, 9.7°, 9.8°, etc., which will not be listed one by one herein.

In some optional embodiments of the present disclosure, the third included angle can be greater than 20 degrees and less than 30 degrees, that is, ∠A can be greater than 20° and less than 30°. In other words, LA can be restricted within a range of (20°, 30°). For example, ∠A can be 21°, 23°, 24°, 25°, 27°, 28°, 29°, etc., which will not be listed one by one herein.

Through researches, it is found that restricting LA within a range of (20°, 30°) is conducive to ensuring the rationality of the parameters of the first prism 20, and is conducive to ensuring the imaging quality of the optical system.

In some optional embodiments of the present disclosure, the included angle formed between the third surface 205 of the first prism 20 and the target plane can be equal to the included angle formed between the first surface 301 of the second prism 30 and the target plane.

Optionally, the included angle formed between the third surface 205 of the first prism 20 and the target plane can be equal to ∠B shown in Fig. 2, and the included angle formed between the first surface 301 of the second prism 30 and the target plane can be equal to ∠Q in Fig. 2. Then, ∠Q = ∠B. In this case, the third surface 205 of the first prism 20 and the first surface 301 of the second prism 30 can be parallel to each other.

Through researches, it is found that if ∠Q = ∠B, then ∠R2 = ∠R1 and ∠C = 2∠A + LB. In this way, it can be ensured that for the optical system provided in the embodiments of the present disclosure, the light emitted by the image source 10 propagates along the target path described above.

As can be known from Fig. 2, ∠R1 = 90°-∠Q = 90°-∠B. Assume that when the light entering from the first surface 201 of the first prism 20 is projected onto the third surface 205 of the first prism 20, the included angle formed between the light and the third surface 205 of the first prism 20 is represented as ∠E in Fig. 2. Then, through geometric derivation, it can be known that ∠R1 = 2∠A + ∠E and ∠C + ∠E = 90°, therefore, 90°-∠B = 2∠A *+* ∠E. Since ∠C + ∠E = 90°, then ∠C + ∠E-∠B = 2∠A + ∠E, and LC = 2∠A + ∠B can be obtained.

Of course, the structure of the optical system provided in the embodiments of the present disclosure is not limited to the structures shown in Figs. 1 to 9-2.

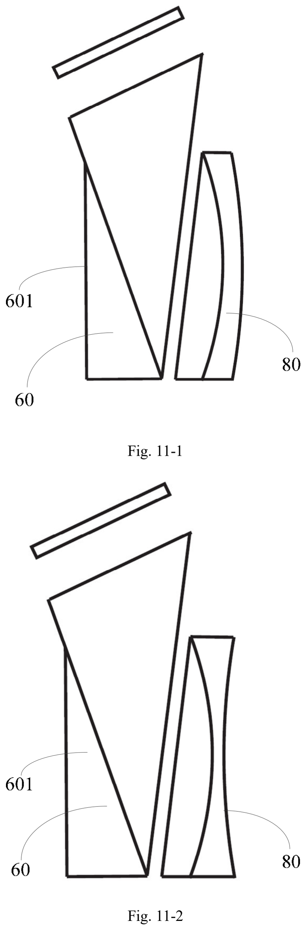

For example, as to the structure of the optical system provided in the embodiments of the present disclosure, please further refer to Fig. 11-1 or Fig. 11-2. As shown in Fig. 11-1 and Fig. 11-2, the first surface 601 of the third prism 60 can be a flat surface, and the surface of the second additional lens 80 close to the external environment can be a curved surface. By setting the surface of the second additional lens 80 close to the external environment as a curved surface, such as a convex surface or a concave surface, it is conducive to compensating for the external light, such that the user can see an undistorted environmental image.

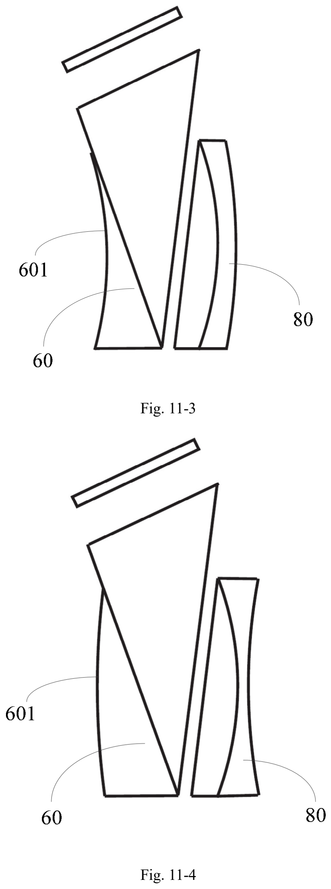

For another example, for the structure of the optical system provided in the embodiments of the present disclosure, please refer to Fig. 11-3 or Fig. 11-4. As shown in Fig. 11-3 and Fig. 11-4, the first surface 601 of the third prism 60 can be a curved surface, and the surface of the second additional lens 80 close to the external environment can also be a curved surface. For example, the two can be a free combination of a convex surface and a concave surface. By setting the first surface 601 of the third prism 60 as a curved surface, a larger eye box can be achieved under the same field of view, and at the same time, it is conducive to improving aberrations. By setting the surface of the second additional lens 80 close to the external environment as a curved surface, it is conducive to compensating for the external light, such that the user can see an undistorted environmental image.

In some optional embodiments of the present disclosure, the refractive indices of the first prism 20, the second prism 30, and the third prism 60 can be consistent.

Herein, the refractive indices of the first prism 20, the second prism 30, and the third prism 60 being consistent can be understood as that the refractive indices of the three are the same or basically the same.

Through researches, it is found that setting the refractive indices of the first prism 20, the second prism 30, and the third prism 60 to be consistent can ensure that when the first surface 301 of the second prism 30 is set to be inclined relative to the optical axis of the lens 40, the third surface 205 of the first prism 20 is set to be inclined relative to the optical axis of the lens 40, and when the inclination of the third surface 205 of the first prism 20 relative to the optical axis of the lens 40 is consistent with the inclination of the first surface 301 of the second prism 30 relative to the optical axis of the lens 40, the light rays emitted by the image source 10 propagate along the target path mentioned above through the same optical path.

In some optional embodiments of the present disclosure, the refractive index of the third prism 60 can be greater than or equal to 1.45 and less than or equal to 1.85, that is, the refractive index of the third prism 60 can be restricted within a range of [1.45, 1.85]. For example, the refractive index of the third prism 60 can be 1.45, 1.55, 1.65, 1.75, 1.85, etc., which will not be listed one by one herein.

Through researches, it is found that the refractive index of the third prism 60 is restricted within a range of [1.45, 1.85], thereby being conducive to effectively compensating for the optical path difference of the light emitted from different light-emitting positions on the image source 10 after propagating in the first prism 20, and being conducive to ensuring the imaging quality of the optical system.

In some optional embodiments of the present disclosure, the refractive index of the third prism 60 can be greater than or equal to 1.45 and less than 1.547, or the refractive index of the third prism 60 can be greater than 1.547 and less than or equal to 1.85, that is, the refractive index of the third prism 60 can be restricted within a range of [1.45, 1.547) ∪ (1.547, 1.85]. For example, the refractive index of the third prism 60 can be 1.45, 1.52, 1.54, 1.546, 1.55, 1.65, 1.75, 1.85, etc., which will not be listed one by one herein.

In some optional embodiments of the present disclosure, the Abbe number of the third prism 60 can be greater than or equal to 40 and less than or equal to 80, that is, the Abbe number of the third prism 60 can be restricted within a range of [40, 80]. For example, the Abbe number of the third prism 60 can be 40, 50, 60, 70, 80, etc., which will not be listed one by one herein.

Through researches, it is found that the Abbe number of the third prism 60 is restricted within a range of [40, 80], thereby being conducive to effectively compensating for the optical path difference of the light emitted from different light-emitting positions on the image source 10 after propagating in the first prism 20, and being conducive to ensuring the imaging quality of the optical system.

In some optional embodiments of the present disclosure, the refractive index of the lens 40 can be consistent with the refractive index of the second prism 30. Herein, the refractive indices of the lens 40 and the second prism 30 being consistent can be understood as that the refractive indices of the two are the same or basically the same.

In some optional embodiments of the present disclosure, if the refractive index of the lens 40 is consistent with the refractive index of the second prism 30, the lens 40 and the second prism 30 can be an integral member. In this way, the lens 40 and the second prism 30 can be integrally formed. Since the lens 40 and the second prism 30 are integrally formed, compared with the separate lens 40, its edge thickness (such as the edge thickness on the left in Figs. 2, 3-2 to 9-2) is increased. A large edge thickness is conducive to reducing the processing difficulty and facilitating mass production.

In some optional embodiments of the present disclosure, for the light emitted by the image source 10 and propagating along the optical axis of the lens 40, the optical path length from the light enters the first prism 20 from the first surface 201 of the first prism 20 to the light first reaches the second film layer 50 is represented as d, and the focal length of the lens 40 is represented as f, then f/d is greater than or equal to 0.4 and less than or equal to 0.6, that is, f/d can be restricted within a range of [0.4, 0.6]. For example, f/d can be 0.4, 0.45, 0.5, 0.51, 0.52, 0.54, 0.57, 0.6, etc., which will not be listed one by one herein.

Through researches, it is found that restricting f/d within a range of [0.4, 0.6] is conducive to achieving a larger eye relief (ER) and a larger eye box (EB) through an optical system of a smaller volume. Restricting f/d within a range of [0.4, 0.6] is also conducive to the correction of field curvature and pupil shift distortion.

It should be noted that the eye relief (ER) is an important design indicator in the optical system. The eye relief can refer to the distance from a preset eye position to the plane of the first optical element (which can be considered as the optical element closest to the preset eye position) placed in the optical system. Taking Fig. 2, Fig. 3-1, and Fig. 3-2 as an example, the distance between the human eye 100 and the first surface 601 of the third prism 60 can be regarded as the eye relief.

In some optional embodiments of the present disclosure, the refractive index of the first prism 20 can be greater than or equal to 1.45 and less than or equal to 1.85, that is, the refractive index of the first prism 20 can be restricted within a range of [1.45, 1.85]. For example, the refractive index of the first prism 20 can be 1.45, 1.5, 1.6, 1.7, 1.8, 1.85, etc., which will not be listed one by one herein.

Through researches, it is found that restricting the refractive index of the first prism 20 within a range of [1.45, 1.85] is conducive to ensuring the rationality of the parameters of the first prism 20, and is conducive to ensuring the imaging quality of the optical system.

In some optional embodiments of the present disclosure, the refractive index of the first prism 20 is greater than or equal to 1.45 and less than 1.547, or the refractive index of the first prism 20 is greater than 1.547 and less than or equal to 1.85.

That is, the refractive index of the first prism 20 can be restricted within a range of [1.45, 1.547) ∪ (1.547, 1.85]. For example, the refractive index of the first prism 20 can be 1.45, 1.457, 1.542, 1.546, 1.549, 1.6, 1.7, 1.8, 1.85, etc., which will not be listed one by one herein.

In some optional embodiments of the present disclosure, the Abbe number of the first prism 20 can be greater than or equal to 40 and less than or equal to 80, that is, the Abbe number of the first prism 20 can be restricted within a range of [40, 80]. For example, the Abbe number of the first prism 20 can be 40, 50, 60, 70, 80, etc., which will not be listed one by one herein.

Through researches, it is found that restricting the Abbe number of the first prism 20 within a range of [40, 80] is conducive to ensuring the rationality of the parameters of the first prism 20, and is conducive to ensuring the imaging quality of the optical system.

In some optional embodiments of the present disclosure, the refractive index of the second prism 30 can be greater than or equal to 1.45 and less than or equal to 1.85, that is, the refractive index of the second prism 30 can be restricted within a range of [1.45, 1.85]. For example, the refractive index of the second prism 30 can be 1.45, 1.5, 1.6, 1.7, 1.8, 1.85, etc., which will not be listed one by one herein.

Through researches, it is found that restricting the refractive index of the second prism 30 within a range of [1.45, 1.85] is conducive to ensuring the rationality of the parameters of the second prism 30, and is conducive to ensuring the imaging quality of the optical system.

In some optional embodiments of the present disclosure, the refractive index of the second prism 30 can be greater than or equal to 1.45 and less than 1.547, or the refractive index of the second prism 30 can be greater than 1.547 and less than or equal to 1.85.

That is, the refractive index of the second prism 30 can be restricted within a range of [1.45, 1.547) ∪ (1.547, 1.85]. For example, the refractive index of the second prism 30 can be 1.45, 1.5, 1.52, 1.54, 1.545, 1.6, 1.7, 1.8, 1.85, etc., which will not be listed one by one herein.

In some optional embodiments of the present disclosure, the Abbe number of the second prism 30 can be greater than or equal to 40 and less than or equal to 80, that is, the Abbe number of the second prism 30 can be restricted within a range of [40, 80]. For example, the Abbe number of the second prism 30 can be 40, 50, 60, 70, 80, etc., which will not be listed one by one herein.

Through researches, it is found that restricting the Abbe number of the second prism 30 within a range of [40, 80] is conducive to ensuring the rationality of the parameters of the second prism 30, and is conducive to ensuring the imaging quality of the optical system.

In some optional embodiments of the present disclosure, the lens 40 and the second prism 30 can be separately arranged, and the refractive index of the lens 40 can be greater than or equal to 1.4 and less than or equal to 1.95, that is, if the lens 40 and the second prism 30 are separately arranged, the refractive index of the lens 40 can be different from the refractive index of the second prism 30, and the refractive index can be restricted within a range of [1.4, 1.95]. For example, the refractive index of the lens 40 can be 1.4, 1.5, 1.6, 1.7, 1.8, 1.9, 1.95, etc., which will not be listed one by one herein.

Through researches, it is found that when the lens 40 and the second prism 30 are separately arranged, restricting the refractive index of the lens 40 within a range of [1.4, 1.95] is conducive to ensuring the rationality of the parameters of the lens 40, and is conducive to ensuring the imaging quality of the optical system.

In some optional embodiments of the present disclosure, the Abbe number of the lens 40 can be greater than or equal to 40 and less than or equal to 100, that is, the Abbe number of the lens 40 can be restricted within a range of [40, 100]. For example, the Abbe number of the lens 40 can be 40, 50, 60, 70, 80, 90, 100, etc., which will not be listed one by one herein.

Through researches, it is found that restricting the Abbe number of the lens 40 within a range of [40, 100] is conducive to ensuring the rationality of the parameters of the lens 40, and is conducive to ensuring the imaging quality of the optical system.

In some optional embodiments of the present disclosure, the refractive index of the first additional lens 70 can be greater than or equal to 1.45 and less than or equal to 2.0, that is, the refractive index of the first additional lens 70 can be restricted within a range of [1.45, 2.0]. For example, the refractive index of the first additional lens 70 can be 1.45, 1.5, 1.6, 1.7, 1.8, 1.9, 2.0, etc., which will not be listed one by one herein.

Through researches, it is found that restricting the refractive index of the first additional lens 70 within a range of [1.45, 2.0] is conducive to ensuring the rationality of the parameters of the first additional lens 70, and is conducive to ensuring the imaging quality of the optical system.

In some optional embodiments of the present disclosure, the Abbe number of the first additional lens 70 can be greater than or equal to 15 and less than or equal to 100, that is, the Abbe number of the first additional lens 70 can be restricted within a range of [15, 100]. For example, the Abbe number of the first additional lens 70 can be 15, 20, 30, 40, 50, 60, 80, 90, 100, etc., which will not be listed one by one herein.

Through researches, it is found that restricting the Abbe number of the first additional lens 70 within a range of [15, 100] is conducive to ensuring the rationality of the parameters of the first additional lens 70, and is conducive to ensuring the imaging quality of the optical system.

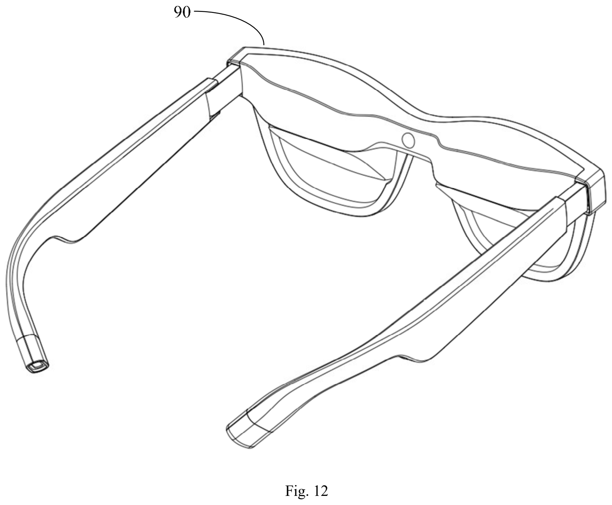

Some exemplary embodiments of the present disclosure also provide a head-mounted display device. The head-mounted display device may include a frame structure 90 shown in Fig. 12 and an optical system in any of the above embodiments. The optical system can be mounted to the frame structure 90.

In some optional embodiments of the present disclosure, the frame structure 90 can be a structure capable of supporting and accommodating the optical system. For example, the frame structure 90 may include, but is not limited to, eyeglass frames, head bands, etc.

In the embodiments of the present disclosure, the optical system can be reliably mounted through the arrangement of the frame structure 90. Through the cooperation of various optical elements in the optical system, the human eye 100 can see the display image provided by the image source 10 to meet the usage requirements of the user. In some embodiments, the human eye 100 can also see the external environment.

It should be noted that all the various optional embodiments and optional implementation manners disclosed above can be flexibly selected and combined as needed to achieve the corresponding functions and effects, and the present disclosure will not list them one by one.

Basic principles of the present disclosure are described above in conjunction with specific embodiments. However, it is to be noted that the advantages, strengths, effects, and the like mentioned in the present disclosure are only examples and not limitations, and these advantages, strengths, effects, and the like should not be regarded as indispensable for the embodiments of the present disclosure. In addition, the specific details in the above disclosure are only for the purposes of exemplification and ease of understanding, and are not limiting. The above details do not constrain the present disclosure to be necessarily implemented with the above specific details.

The embodiments in the specification are described in a progressive manner. Each embodiment focuses on differences from other embodiments. For the same and similar parts between the embodiments, reference can be made to each other.

Those skilled in the art can make various changes and modifications to the present disclosure without departing from the spirit and scope of the present application. Therefore, if these modifications and variations of the present application fall within the scope of the claims of the present disclosure and their equivalent technologies, the present disclosure is also intended to cover these changes and modifications.

## Claims

1. An optical system, comprising:
an image source (10);
a first prism (20) having a first surface (201) proximate the image source (10), a second surface (203), and a third surface (205);
a second prism (30), wherein the second surface (203) of the first prism (20) is located at a side of the first prism (20) away from the second prism (30), the third surface (205) of the first prism (20) is located at a side of the first prism (20) proximate the second prism (30), the second prism (30) has a first surface (301) proximate the third surface (205) of the first prism (20);
a lens (40) located at a side of the second prism (30) away from the first prism (20), wherein a first included angle (∠R1) formed between the first surface (301) of the second prism (30) and an optical axis of the lens (40) and a second included angle (∠R2) formed between the third surface (301) of the first prism (20) and the optical axis of the lens (40) are both acute angles, and the first included angle (∠R1) is equal to the second included angle (∠R2);
a first film layer (45) located at the second surface (203) of the first prism (20) and capable of reflecting and transmitting light; and
a second film layer (50) located at a side of the lens (40) away from the second prism (30) and capable of reflecting light;
wherein light emitted by the image source (10) enters the first prism (20) from the first surface (201) of the first prism (20), undergoes at least one total reflection within the first prism (20), is reflected by the first film layer (45), and exit through the third surface (205) of the first prism (20) and enters the second prism (30) from the first surface (301) of the second prism (30); and the light is reflected by the second film layer (50) after passing through the second prism (30) and the lens (40), the light reflected by the second film layer (50) sequentially passes through the lens (40), the first surface (301) of the second prism (30), the third surface (205) of the first prism (20), and the second surface (203) of the first prism (20), and exits through the first film layer (45).

2. The optical system according to claim 1, wherein an included angle formed between the second surface (203) of the first prism (20) and a plane perpendicular to the optical axis of the lens (40) is a third included angle (∠A) (∠A), and an included angle formed between the first surface (201) of the first prism (20) and the third surface (205) of the first prism (20) is a fourth included angle (∠C), and the fourth included angle (∠C) is greater than twice the third included angle (LA).

3. The optical system according to claim 2, wherein an included angle formed between the third surface (205) of the first prism (20) and the plane perpendicular to the optical axis of the lens (40) is a fifth included angle (∠B), and the fourth included angle (∠C) is equal to a sum of the fifth included angle (∠B) and twice the third included angle (∠A).

4. The optical system according to claim 2, wherein an included angle formed between the third surface (205) of the first prism (20) and the plane perpendicular to the optical axis of the lens (40) is a fifth included angle (∠B), and a ratio of twice a sum of the third included angle (LA) and the fifth included angle (∠B) to a complementary angle of the third included angle (∠A) is greater than 0.9.

5. The optical system according to claim 2, wherein an included angle formed between the third surface (205) of the first prism (20) and the plane perpendicular to the optical axis of the lens (40) is a fifth included angle (∠B), and a difference between twice a sum of the third included angle (∠A) and the fifth included angle (∠B) and a complementary angle of the third included angle (∠A) is greater than negative 6 degrees.

6. The optical system according to claim 2, wherein an included angle formed between the third surface (205) of the first prism (20) and the plane perpendicular to the optical axis of the lens (40) is a fifth included angle (∠B), and the fifth included angle (∠B) is greater than 5 degrees and less than 15 degrees.

7. The optical system according to claim 2, wherein the third included angle (LA) is greater than 20 degrees and less than 30 degrees.

8. The optical system according to claim 1, further comprising:
a compensation member proximate the second surface (203) of the first prism (20), and after the light reflected by the second film layer (50) passes through the first prism (20) again, the light exits after passing through the compensation member, wherein the compensation member is a third prism (60), the third prism (60) has a first surface (601) located at a side of the third prism (60) away from the first prism (20) and a second surface (603) located at a side of the third prism (60) proximate the first prism (20), and after the light reflected by the second film layer (50) passes through the first prism (20) again, the light exits after passing through the second surface (603) of the third prism (60) and the first surface (601) of the third prism (60).

9. The optical system according to claim 1, wherein the second surface (203) of the first prism (20) has a partial area proximate the image source (10) provided with a notch (207), and the notch (207) is recessed from this partial area into interior of the first prism (20).

10. The optical system according to claim 1, wherein a refractive index of the lens (40) is consistent with a refractive index of the second prism (30), and the lens (40) and the second prism (30) are an integral member.

11. The optical system according to claim 1, wherein as to light emitted by the image source (10) and propagating along the optical axis of the lens (40), an optical path length from the light enters the first prism (20) from the first surface (201) of the first prism (20) to the light first reaches the second film layer (50) is represented as d, and a focal length of the lens (40) is represented as f, then f/d is greater than or equal to 0.4 and less than or equal to 0.6.

12. The optical system according to claim 1, wherein the first surface (201) of the first prism (20) is a curved surface.

13. The optical system according to claim 1, further comprising:
a first additional lens (70) located between the image source (10) and the first surface (201) of the first prism (20);
wherein, the light emitted by the image source (10) enters the first prism (20) after passing through the first additional lens (70).

14. The optical system according to claim 1, wherein the second film layer (50) is a semi-transparent and semi-reflective film, and the optical system further comprises:
a second additional lens (80) located at a side of the second film layer (50) away from the lens (40).

15. A head-mounted display device, comprising:
a frame structure (90); and
the optical system according to any one of claims 1 to 14, wherein the optical system is mounted to the frame structure (90).
